# EUROPÄISCHE PATENTSCHRIFT

(11) **EP 3 912 880 B1**
(45) Veröffentlichungstag und Bekanntmachung des Hinweises auf die Patenterteilung: **12.07.2023**
(21) Anmeldenummer: 20175140.1
(22) Anmeldetag: 18.05.2020
(51) Int. Cl.: B61D 17/20, B61D 17/10, B60D 5/00

(54) **ÜBERGANGSPLATTFORM EINES ÜBERGANGS MIT EINER TRITTPLATTE UND ÜBERGANG MIT EINER SOLCHEN ÜBERGANGSPLATTFORM**
TRANSITION PLATFORM OF A TRANSITION WITH A FOOTPLATE AND TRANSITION WITH SUCH A TRANSITION PLATFORM
PLATEFORME DE PASSERELLE POUR PIÉTONS D'UNE PASSERELLE POUR PIÉTONS DOTÉE D'UNE PLAQUE D'APPUI ET PASSERELLE POUR PIÉTONS DOTÉE D'UNE TELLE PLATEFORME DE PASSERELLE POUR PIÉTONS

(43) Veröffentlichungstag der Anmeldung: 24.11.2021
(73) Patentinhaber: Hübner GmbH & Co. KG, 34123 Kassel (DE)
(72) Erfinder: Baake, Achim, 34479 Breuna (DE)

(56) Entgegenhaltungen:
- EP-A1- 1 564 101
- EP-A1- 2 161 176
- EP-A1- 2 457 796
- CN-U- 209 683 696

## Beschreibung

Die Erfindung betrifft eine Übergangsplattform für einen Übergangzwischen zwei beweglich miteinander verbundenen Fahrzeugteilen, insbesondere eines Schienenfahrzeugs oder eines Busses, mit den Merkmalen des Oberbegriffs von Anspruch 1. Die Erfindung betrifft weiterhin einen Übergang mit einer solchen Übergangsplattform.

### STAND DER TECHNIK

Übergänge dienen zum sicheren Hinüberwechseln von Passagieren zwischen zwei Fahrzeugteilen eines Schienenfahrzeugs oder eines Busses. Im Übergang ist bodenseitig eine Übergangsplattform angeordnet, welche gemäß einer üblichen Ausführung eine Trittplatte aufweist, welche auf zwei seitlich zur Trittplatte angeordnete Gleitplatten aufliegt, die ihrerseits an den Fahrzeugteilen angebracht sind. Die Trittplatte und insbesondere deren Oberseite, die im Einbauzustand in Richtung des von dem Übergang gebildeten Durchgangsbereichs weist, dienen als Teil der Begehfläche für Passagiere beim Hinüberwechseln zwischen den Fahrzeugteilen.

Während der Fahrt üben die Fahrzeugteile solcher Gelenkfahrzeuge unterschiedlichste Bewegungen zueinander aus. So ergeben sich Wank-, Knick- und Nickbewegungen. Insbesondere bei Wankbewegungen, d. h. einer Torsionsbewegung der beiden Fahrzeugteile relativ zueinander, hat die Trittplatte das Bestreben, sich relativ zu den Bodenplatten aufzustellen, wobei ein Spalt entstehen kann.

Aus der EP 2 161 176 EP ist eine Trittplatte eines Übergangs bekannt, die zum Aufliegen auf Bodenplatten eines jeweiligen Fahrzeugteils bestimmt ist. Auf der Unterseite der Trittplatte ist ein Arm vorgesehen, der die jeweilige Bodenplatte des Fahrzeugs untergreift und dadurch ein Abheben der Trittplatte bei einer Wankbewegung der Fahrzeugteile zueinander verhindert. Der Arm ist an der Unterseite der Trittplatte durch eine Achse verschwenkbar. Mittels eines Seilzugs lässt sich der Arm gegen eine Federkraft, mittels der der Arm in eine Arretierposition gedrückt wird, aus dieser herausschwenken. Dadurch wird eine Entnahme der Trittplatte aus der Übergangsplattform des Übergangs möglich. Umgekehrt ist eine Montage der Trittplatte möglich, indem der Seilzug nachgelassen und der Arm mittels Federkraft in die Arretierposition geschwenkt wird.

Ein solcher Seilzug ist fehleranfällig und kann dazu führen, dass der Arm insbesondere nicht zuverlässig zurück in die Arretierposition verschwenkt wird. Weiterhin kann ein Seilzug reißen, wodurch der Arm nicht aus der Arretierposition lösbar ist. Ein Seilzug ist zudem oft einfach zugänglich und kann somit von Unbefugten betätigt werden.

Aus dem Dokument CN 209683696 U ist eine Trittplatte für einen Übergang bekannt, die mittels Schwenkarmen an wagenseitigen Bodenplatten gegenüber einem Abheben verriegelt werden kann. Zum Schwenken der Schwenkarme in eine arretierte Stellung bzw. eine gelöste Stellung sind seitlich vorstehende Hebel vorgesehen.

### OFFENBARUNG DER ERFINDUNG

Davon ausgehend liegt der vorliegenden Erfindung die Aufgabe zugrunde, einen Übergang mit einer Trittplatte der eingangs genannten Art zu schaffen, mit der der Schwenkarm einfach und zuverlässig zu betätigen ist, z. B. um eine Lösbarkeit aus der Arretierposition zu jeder Zeit zu gewährleisten, und eine Sicherheit gegen ein unbefugtes Eingreifen in die Übergangsplattform bietet.

Als technische Lösung dieser Aufgabe wird erfindungsgemäß ein Übergang mit einer Trittplatte mit den Merkmalen des Anspruches 1 vorgeschlagen. Vorteilhafte Weiterbildungen der Erfindung sind in den abhängigen Ansprüchen angegeben.

Die Erfindung schließt die technische Lehre ein, dass das Drehgelenk ein Betätigungsmittel zum Verschwenken des Schwenkarms aufweist, das im Einbauzustand von einer Oberseite der Trittplatte betätigbar ist. Die Oberseite weist dabei insbesondere im Einbauzustand in Richtung des von dem Übergang gebildeten Durchgangsbereichs und bildet die begehbare Fläche der Trittplatte.

Durch das Betätigungsmittel wird eine direkte Betätigung des Schwenkarms von der Oberseite der Trittplatte ermöglicht. Dadurch wird die Betätigung des Schwenkarms einfach und zuverlässig möglich und sowohl eine Montage als auch ein Herausnehmen der Trittplatte wird vereinfacht.

Gemäß einer erfindungsgemäßen Ausführungsform sind das Drehgelenk und das Betätigungsmittel baueinheitlich miteinander ausgebildet. Erfindungsgemäß wird vorgeschlagen, dass eine gemeinsame an der Trittplatte anordenbare Baueinheit geschaffen wird. Dadurch wird auf vorteilhafte Weise das ohnehin vorhandene und notwendige Drehgelenk in seiner Funktion erweitert, als Betätigungsmittel zu dienen bzw. mit Mitteln ausgestattet zu werden, mit denen man den Schwenkarm betätigen kann.

Gemäß einer erfindungsgemäßen Ausführungsform weist das Betätigungsmittel eine Schlüsselkontur zum Aufnehmen eines Steckschlüssels und zum Drehen des Betätigungsmittels um eine Drehachse auf. Dadurch wird es ermöglicht, den Schenkarm durch eine einfache Drehbewegung wahlweise in eine Arretierposition oder eine Montageposition zu schwenken. Insbesondere kann die Schlüsselkontur die Form eines Außensechskants aufweisen. So ist mittels eines Steckschlüssels mit einem Innensechskant als Standardwerkzeug ein Verschwenken des Schwenkarms möglich, wenn das Werkzeug auf die Schlüsselkontur aufgesetzt wird.

Das Betätigungsmittel kann einen Bolzen aufweisen, der drehbar in einem Gehäuse des Drehgelenks angeordnet ist. Dadurch werden eine sichere und geschützte Anordnung des Bolzens und seine Drehbarkeit gewährleistet. Dazu kann der Bolzen in dem Gehäuse gelagert sein. Das Gehäuse kann zudem als Drehführung bei der Drehbewegung eines Werkzeugs, beispielsweise eines Steckschlüssels, beim Betätigen des Betätigungsmittels dienen. Das Gehäuse dient insbesondere als Führung für das Werkzeug beim Aufsetzen auf das Betätigungsmittel.

Das Gehäuse kann drehfest in einer Aufnahmeöffnung an der Trittplatte gehalten sein. Dadurch kann eine zweckmäßige Anordnung und Ausrichtung des Drehgelenks relativ zu der Trittplatte sichergestellt werden. Weiterhin kann eine Montage des Drehgelenks an der Trittplatte so einfacher durchzuführen sein. Darüber hinaus kann durch die drehfeste Verbindung zwischen dem Gehäuse und der Trittplatte erreicht werden, dass das Betätigungsmittel mit dem Schwenkarm gegenüber der Trittplatte verschwenkbar ist und zugleich als Drehgelenk dient.

Gemäß einer Ausführungsform ist zwischen dem Gehäuse und dem Betätigungsmittel ein Sicherungsring angeordnet. Dabei weist der Sicherungsring vorteilhafterweise eine Innenkontur zur formschlüssigen Aufnahme der außenumfänglichen Schlüsselkontur des Betätigungsmittels auf. Besonders vorteilhafterweise füllt der Sicherungsring einen Spalt zwischen dem Gehäuse und dem Betätigungsmittel zumindest an einer Oberseite aus. Dadurch wird sichergestellt, dass keine Fremdkörper und insbesondere kein Schmutz in den Spalt zwischen dem Gehäuse und der Schlüsselkontur des Bolzens eindringen können.

Der Sicherungsring ist insbesondere entlang der Drehachse axial verschiebbar. Dabei ist der Sicherungsring mittels der Federkraft eines Federelementes in Richtung der Oberseite vorgespannt. Durch die Vorspannung wird sichergestellt, dass der Sicherungsring stets in dem Spalt zwischen Gehäuse und dem Betätigungsmittel an der Oberseite gehalten wird. Dadurch wird ein Eindringen von Fremdkörpern und Schmutz durch den Spalt in das Gehäuse und das Drehgelenk verhindert. Durch die axiale Verschiebbarkeit des Sicherungsringes nach unten ist ein Aufsetzen eines Werkzeugs auf das Betätigungsmittel zum Drehen des Betätigungsmittels mit dem Schwenkarm jedoch weiterhin möglich. Bei dem Herunterdrücken des Sicherungsrings entlang der Drehachse in Richtung des Schwenkarms können die Schlüsselkontur und das Gehäuse als Führung für den Sicherungsring dienen, und das Werkzeug wird in den Spalt eingeführt.

Weiterhin kann es von Vorteil sein, wenn das Gehäuse eine Kulisse aufweist und der Sicherungsring einen Vorsprung aufweist, der in die Kulisse des Gehäuses hineinragt und parallel zur Drehachse entlang der Kulisse verschiebbar ist. Der Sicherungsring ist dabei zwischen zwei Positionen verschiebbar: einer Sperrposition, bei der das Gehäuse und das Betätigungsmittel mittels des Sicherungsrings drehfest gekoppelt sind, und einer Drehposition, bei der das Betätigungsmittel frei von der Innenkontur des Sicherungsrings drehbar ist. Sowohl in der Sperrposition als auch in der Drehposition ist der Vorsprung in der Kulisse des Gehäuses angeordnet. Zweckmäßigerweise verläuft die Kulisse parallel zu der Drehachse und der Vorsprung ist stets derart in der Kulisse angeordnet, dass sich der Sicherungsring nicht um die Drehachse drehen kann. Dadurch wird erreicht, dass die Innenkontur des Sicherungsrings in einer Montageposition und in einer Verriegelungsposition zuverlässig mit der Schlüsselkontur in Formschluss gelangt.

Gemäß einer Ausführungsform ist der Schwenkarm drehfest an dem Bolzen angeordnet. Insbesondere ist der Schwenkarm um die Drehachse formschlüssig mit dem Bolzen verbunden. Dadurch ist eine zuverlässige Drehmomentübertragung vom Bolzen auf den Schwenkarm ermöglicht.

Der Schwenkarm ist vorzugsweise mittig an dem Bolzen angeordnet und so lang ausgestaltet, dass der Schwenkarm mit jedem seiner Armendbereiche eine Gleitplatte eines der Fahrzeugteile untergreift. Dadurch wird die Anzahl der Bauteile gering gehalten und eine besonders zuverlässige Halterung der Trittplatte gewährleistet.

Das Betätigungsmittel kann eine Markierung zur Anzeige einer Drehstellung des Schwenkarms aufweisen. Mittels der Markierung kann durch einen Bediener festgestellt werden, ob sich der Schwenkarm in einer Arretierposition oder in einer Montageposition befindet. Dadurch werden die Montage und Inspektion vereinfacht.

Vorzugsweise bilden die Trittplatte und das Drehgelenk an der Oberseite eine Begehfläche. Dadurch ist eine im Wesentlichen ebene Fläche gebildet, die ohne Hindernis einfach von Passagieren überquert werden kann.

Die Trittplatte kann einen Pin zum Anordnen in einem komplementären Schlitz in einer der Gleitplatten aufweisen. Dadurch kann eine Positionierung der Trittplatte relativ zu der Gleitplatte vereinfacht werden. Weiterhin können so eine Fehlpositionierung und/oder ein lateraler Versatz der Trittplatte in dem Übergang verhindert werden.

Der Schwenkarm kann an seinen Enden ein Gleitstück zum Andrücken an die jeweiligen Gleitplatten aufweisen. Die Gleitstücke sind vorzugsweise aus Kunststoff gefertigt und weisen eine Einlaufschräge an den Flanken auf, sodass die Endseiten des Schwenkarms vereinfacht unter die Unterseite der Gleitplatte geschwenkt werden können und dort die Einlaufschräge entlanglaufend eine Spannung auf dem Schwenkarm aufbaut, sodass die Trittplatte gegen die Unterseite der Gleitplatte vorgespannt ist. Dadurch wird einerseits eine sichere Montage der Trittplatte mit dem Schwenkarm an den Fahrzeugteilen mit den Gleitplatten gewährleistet und andererseits ein sicherer Sitz unter Vorspannung der Trittplatte auf der Gleitplatte der Fahrzeugteile sichergestellt. Die Vorspannung ist dabei im Idealfall so groß, dass ein sicherer Sitz erreicht und das Risiko einer Spaltbildung zwischen der Trittplatte und der Gleitplatte minimiert wird. Gleichzeitig ist die Vorspannung aber nur so groß, dass der Schwenkarms noch mit vertretbarem Kraftaufwand verschwenkt werden kann.

Gemäß einer Ausführungsform sind mindestens zwei Drehgelenke vorgesehen, die in Längsrichtung der Trittplatte voneinander beabstandet angeordnet sind. Konkret können die beiden Drehgelenke an gegenüberliegenden Seiten der Trittplatte angeordnet sein, so dass die Trittplatte mit der jeweiligen Gleitplatte an jeweils zwei Stellen gekoppelt ist. Damit kann insbesondere bei Wankbewegungen des Fahrzeugs ein Abheben der Trittplatte von den seitlichen Gleitplatten wirksam verhindert werden.

Die Erfindung betrifft weiterhin einen Übergang zur Anordnung zwischen zwei beweglich miteinander verbundenen Fahrzeugteilen mit einer Übergangsplattform, wobei die Übergangsplattform mit den vorstehend beschriebenen Merkmalen ausgeführt ist.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Schwenkarm die Rede ist, so ist dies so zu verstehen, dass genau ein Schwenkarm, zwei Schwenkarme oder mehrere Schwenkarme vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: in perspektivischer Ansicht eine Draufsicht auf eine Trittplatte in Anordnung auf zwei Gleitplatten,
- Fig. 2: in perspektivischer Ansicht die Unterseite der Trittplatte gemäß Figur 1,
- Fig. 3: in isoliert perspektivischen Ansichten ober- und unterseitig ein Drehgelenk mit einem an diesem angeordneten Schwenkarm,
- Fig. 4: eine Draufsicht auf das Drehgelenk mit dem Schwenkarm,
- Fig. 5: in einer Seitenansicht das Drehgelenk mit daran angeordnetem Schwenkarm,
- Fig. 6: in einer Explosionsdarstellung das Drehgelenk mit dem Schwenkarm und
- Fig. 7: in geschnittener Seitenansicht entlang der Schnittlinie B gemäß Fig. 4 einen vergrößerten Ausschnitt des Drehgelenks mit dem Betätigungsmittel.

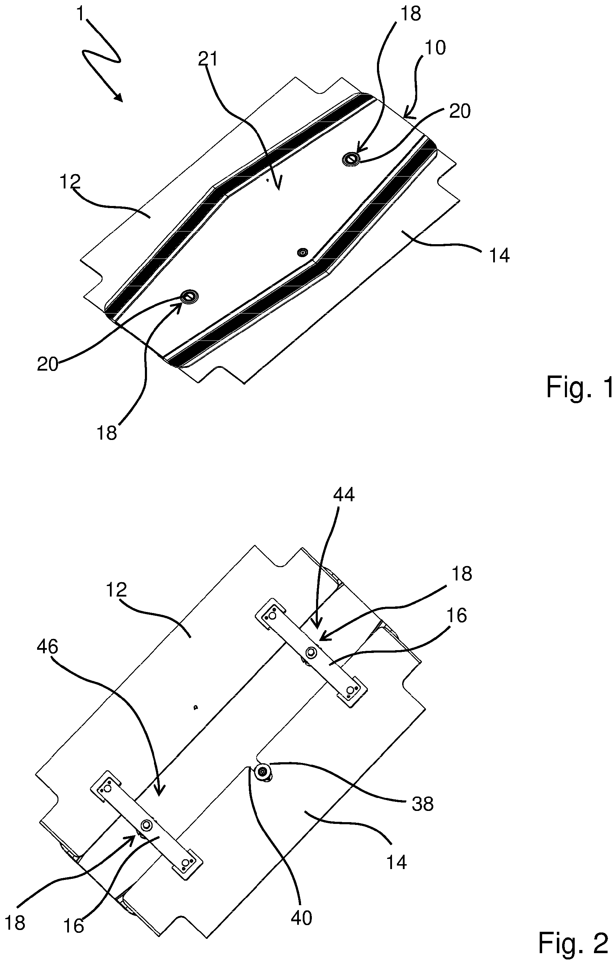

Fig. 1 zeigt in einer perspektivischen Ansicht eine erfindungsgemäße Übergangsplattform 1 mit einer Trittplatte 10. Die Trittplatte 10 ist auf Gleitplatten 12, 14 zweier beweglich miteinander verbundener Fahrzeugteile aufgesetzt. Mit Blick auf eine Oberseite 21 der Trittplatte 10 sind Drehgelenke 18 und jeweils zugehörige Betätigungsmittel 20 zum Drehen eines hier nicht sichtbaren Schwenkarms an der Trittplatte 10 angeordnet. Bei Bewegung der Fahrzeugteile gleiten die Gleitplatten 12,14 unter der Trittplatte 10 ab, sodass stetig eine spaltfreie Begehfläche zum Überwechseln von Passagieren zwischen den Fahrzeugteilen gebildet ist. Die Begehfläche ist aus der Oberfläche 21 des Trittbrettes 10 und den Gleitplatten 12 und 14 gebildet.

Fig. 2 zeigt in perspektivischer Ansicht die Gleitplatten 12, 14 und die Trittplatte 10 im Einbauzustand von unten. Dabei sind an dem Drehgelenk 18 angeordnete Schwenkarme 16 gezeigt, die in einer Arretierposition unter die Gleitplatten 12, 14 geschwenkt sind und etwa quer zur Längserstreckung der Trittplatte 10 verlaufen. Dabei untergreift jeder Schwenkarm 16 die Gleitplatten 12, 14, die somit jeweils zwischen einer Unterseite der Trittplatte 10 und den Schwenkarmen 16 eingefasst sind. Zusätzlich ist ein Pin 38 der Trittplatte 10 in einem Schlitz 40 der Gleitplatte 14 angeordnet und hält die Trittplatte 10 relativ zu der Gleitplatte 14 in Position.

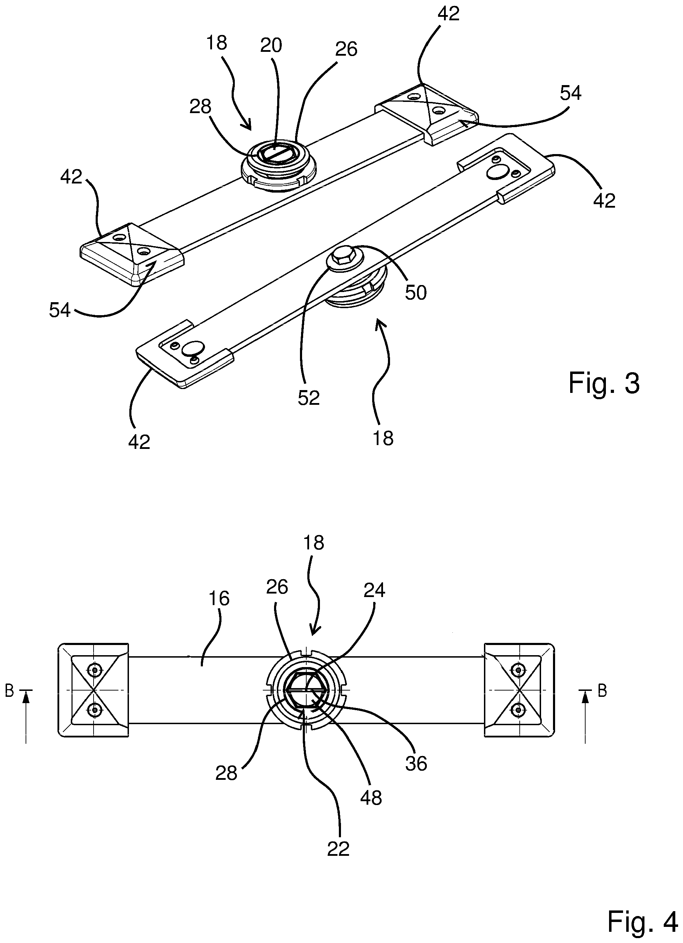

Die Fig. 3 zeigt in perspektivischer Ansicht von einer Oberseite und einer Unterseite das Drehgelenk 18 mit dem Schwenkarm 16. Das Drehgelenk 18 umfasst ein Gehäuse 26 mit dem darin drehbar angeordneten Betätigungsmittel 20 in Ausgestaltung eines Bolzens 48. Der Bolzen 48 ist drehfest mit dem Schwenkarm 16 verbunden und mittels einer Schraube 50 und einer Unterlegscheibe 52 axial an dem Schwenkarm 16 gehalten. Zwischen dem Bolzen 48 und dem Gehäuse 26 ist ein Sicherungsring 28 angeordnet. An Armendbereichen des Schwenkarms 16 sind Gleitstücke 42 angeordnet. Die Gleitstücke 42 weisen an ihren Flanken eine Schräge 54 auf. Die Schräge 54 ermöglicht ein einfaches Aufgleiten auf die Gleitplatten beim Verschwenken des Schwenkarms 16.

Fig. 4 stellt in einer Draufsicht das Drehgelenk 18 mit dem Schwenkarm 16 dar. Der Bolzen 48 ist um eine Drehachse 24 drehbar in dem Gehäuse 26 des Drehgelenks 18 angeordnet. Der Bolzen 48 weist eine Schlüsselkontur 22 auf. Die Schlüsselkontur 22 ist die eines Außensechskants, sodass ein Steckschlüssel auf die Schlüsselkontur 22 des Bolzens 48 aufgesteckt werden kann. Mit einem Steckschlüssel kann der Bolzen 48 und somit der damit drehfest verbundene Schwenkarm 16 gedreht werden. Zwischen dem Gehäuse 26 und der Schlüsselkontur 22 des Bolzens 48 ist ein Sicherungsring 28 angeordnet, der beim Aufsetzen des Werkzeugs entlang der Drehachse 24 in das Gehäuse 26 eingedrückt werden kann. Der Sicherungsring 28 ist mit einer Federkraft beaufschlagt, sodass dieser den Spalt zwischen dem Bolzen 48 und dem Gehäuse 26 vollständig ausfüllt und ein Eindringen von Fremdkörpern und Schmutz in das Gehäuse 26 verhindert.

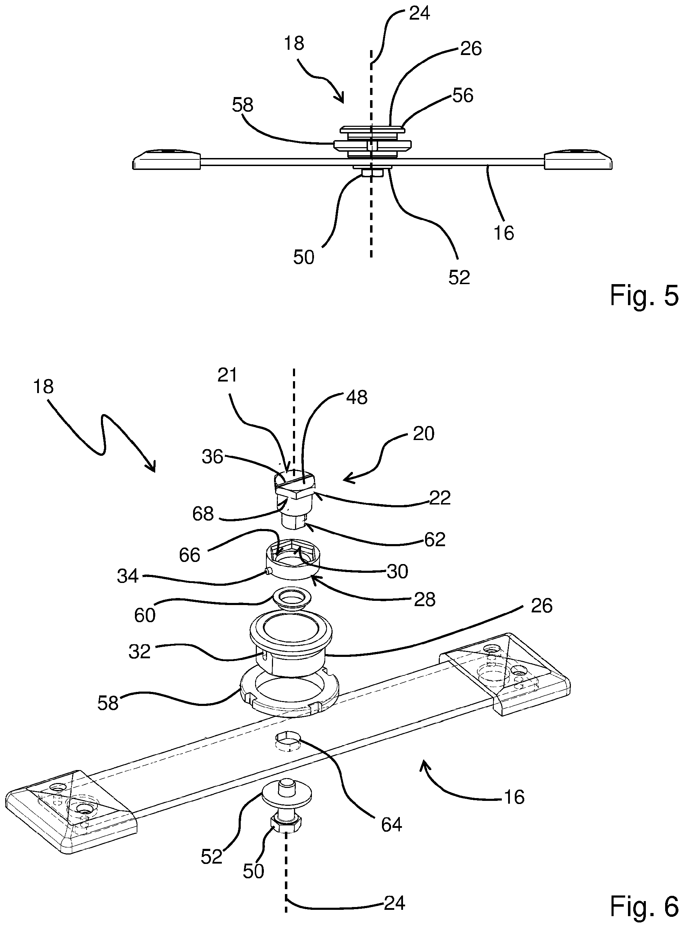

Die Fig. 5 zeigt in einer Seitenansicht das Drehgelenk 18 mit dem Schwenkarm 16. Der Schwenkarm 16 ist um die Drehachse 24 mittels einer Drehbewegung des Betätigungsmittels verschwenkbar. Der Schwenkarm 16 ist mittels der Schraube 50 und der Unterlegscheibe 52 an dem Drehgelenk 18 angeordnet. Das Gehäuse 26 weist einen Kragen 56 auf. Auf das Gehäuse 26 ist eine Nutmutter 58 aufgeschraubt, sodass das Gehäuse 26 in einer Aufnahmeöffnung in der Trittplatte fest angeordnet werden kann, indem die Nutmutter angezogen wird und die Trittplatte zwischen der Nutmutter 58 und dem Kragen 56 verspannt wird, während das Gehäuse 26 in der Aufnahmeöffnung der Trittplatte eingeführt ist.

Die Fig. 6 zeigt in einer Explosionsdarstellung das Drehgelenk 18 mit der Nutmutter 58 und dem Schwenkarm 16. Das Drehgelenk 18 und das Betätigungsmittel 20 sind dabei als eine Baueinheit ausgebildet mit den folgenden Teilen: das Gehäuse 26, das Betätigungsmittel 20 in Ausgestaltung des Bolzens 48, sowie der Sicherungsring 28, eine Buchse 60, die Schraube 50 und die Unterlegscheibe 52. Die Nutmutter 58 ist auf das Gehäuse 26 aufschraubbar. Die Buchse 60 befindet sich zwischen dem Gehäuse 26 und dem Bolzen 48 und bildet eine Aufnahme, sowie eine Gleitfläche zum Drehen des Bolzens 48 relativ zu dem Gehäuse 26 um die virtuelle Drehachse 24. Von der Oberseite 21 ausgehend ist die Schlüsselkontur 22 an dem Bolzen 48 ausgeformt. An einem der Aufnahmekontur 22 gegenüberliegenden Ende des Bolzens 48 weist dieser eine Abflachung 62 zur formschlüssigen Aufnahme eines Schlitzlochs 64 des Schwenkarms 16 auf. Der Bolzen 48 weist auf seiner Oberseite 21 eine Markierung 36 zur Anzeige einer Drehstellung des Bolzens 48 mit dem daran angebrachtem Schwenkarm 16 auf. Der Sicherungsring 28 weist auf seiner Innenseite eine Innenkontur 30 zur formschlüssigen Aufnahme der Schlüsselkontur 22 des Bolzens 48 auf. Weiterhin weist der Sicherungsring 28 einen Anschlag 66 zur Anlage an einem Vorsprung 68 des Bolzens 48 auf. An einem Außenumfang des Sicherungsrings 28 steht ein Vorsprung 34 zur Anordnung in einer Kulisse 32 des Gehäuses 26 hervor. Die Kulisse 32 verläuft parallel zu der Drehachse 24 in dem Gehäuse 26.

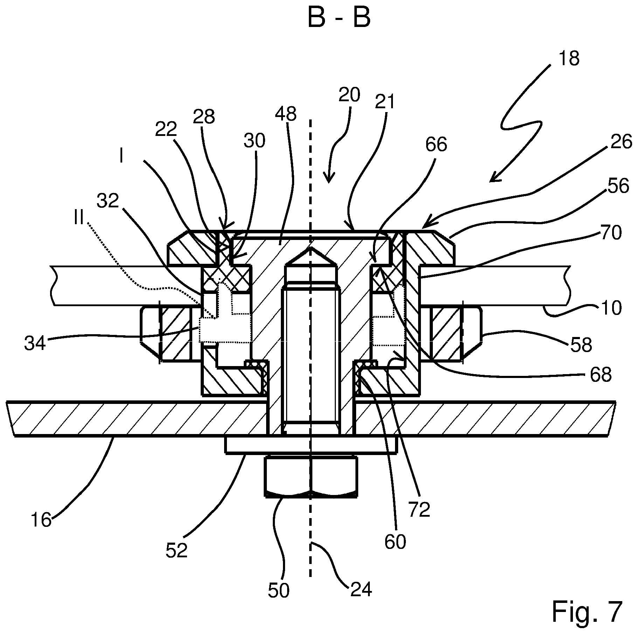

Fig. 7 zeigt schließlich in einer geschnittenen seitlichen Detailansicht gemäß Fig. 4 entlang der Schnittlinie B-B das Drehgelenk 18 mit daran angeordnetem Schwenkarm 16. Das Drehgelenk 18 ist dabei in einer Aufnahmeöffnung 70 der Trittplatte 10 angeordnet und ist mittels des Gehäuses 26, mittels des Kragens 56 und der Nutmutter 58 drehfest an der Trittplatte 10 gehalten.

Der Schwenkarm 16 ist drehfest mit dem Bolzen 48 verbunden und mittels der Schraube 50 und der Unterlegscheibe 52 an dem Bolzen 48 gehalten. Somit sind der Bolzen 48 mit dem Schwenkarm 16 um die Drehachse 24 relativ zu dem Gehäuse 26 und der Trittplatte 10 verdrehbar. Die Drehachse 24 ist orthogonal zu der Begehfläche ausgerichtet. Der Schwenkarm 16 ist in einer Ebene parallel zu der Begehfläche verschwenkbar. Die Buchse 60 bildet eine Aufnahme und eine Gleitfläche für den Bolzen 48 zwischen dem Gehäuse 26 und Bolzen 48. Der Sicherungsring 28 ist mit seinem Vorsprung 34 in der Kulisse 32 des Gehäuses 26 angeordnet. Mit einer Federkraft beaufschlagt, wird der Sicherungsring 28 in eine Sperrposition I gedrückt und dort gehalten.

In der Sperrposition I umschließt der Sicherungsring 28 mit seiner Innenkontur 32 die Schlüsselkontur 22 des Bolzens 48 formschlüssig. Dabei sitzt der Vorsprung 34 in der Kulisse 32 und der Sicherungsring 28 bewirkt eine formschlüssige, drehfeste Kopplung zwischen dem Gehäuse 26 und dem Bolzen 48, wodurch ein Drehen oder Verschwenken um die Drehachse 24 verhindert wird. Der Sicherungsring 28 bildet dabei eine Verriegelung. In der Sperrposition I befindet sich der Sicherungsring 28 bündig an der Oberseite 21 mit dem Bolzen 48, dem Gehäuse 26 und der Trittplatte 10 und füllt einen Spalt zwischen dem Bolzen 48 und dem Gehäuse 26 vollständig aus. Dadurch wird verhindert, dass z. B. Fremdkörper oder Schmutz in das Innere des Gehäuses 26 eintreten können, und der Bolzen 48 ist gegen ein Verdrehen im Gehäuse 26 gesichert. In dieser Sperrposition I wird der Anschlag 66 mittels der Federkraft gegen den Vorsprung 68 des Bolzens gedrückt. Dadurch ist ein formschlüssiger Gegenhalt gebildet, der ein Herausspringen des Sicherungsrings 28 aus dem Gehäuse 26 verhindert.

Beim Aufschieben eines Steckschlüssels entlang der Drehachse 24 auf die Schlüsselkontur 22 des Bolzens 48 wird der Sicherungsring 28 entlang der Drehachse 24 von der Oberseite 21 weg in Richtung des Schwenkarms 16 gedrückt. Dabei wird der Sicherungsring 28 an einer Gehäuseinnenwand 72 und der Kulisse 32 geführt. Bei einem Herunterdrücken des Sicherungsrings 28 in die Drehposition II mittels eines Werkzeugs durch einen Bediener löst sich die Innenkontur 30 des Sicherungsrings 28 von der Schlüsselkontur 22. Infolgedessen löst sich auch die formschlüssige und drehmomentstarre Kopplung zwischen dem Gehäuse 26 und dem Bolzen 48. Dadurch wird der Bolzen 48 mit dem Schwenkarm 16 frei verschwenkbar und lässt sich zwischen der Montageposition und der Arretierposition verschwenken.

### Bezugszeichenliste:

- 1: Übergangsplattform
- 10: Trittplatte
- 12: Gleitplatte
- 14: Gleitplatte
- 16: Schwenkarm
- 18: Drehgelenk
- 20: Betätigungsmittel
- 21: Oberseite
- 22: Schlüsselkontur
- 24: Drehachse
- 26: Gehäuse
- 28: Sicherungsring
- 30: Innenkontur
- 32: Kulisse
- 34: Vorsprung
- 36: Markierung
- 38: Pin
- 40: Schlitz
- 42: Gleitstück
- 44: laterale Seite
- 46: laterale Seite
- 48: Bolzen
- 50: Schraube
- 52: Unterlegscheibe
- 54: Schräge
- 56: Kragen
- 58: Nutmutter
- 60: Buchse
- 62: Abflachung
- 64: Schlitzloch
- 66: Anschlag
- 68: Vorsprung
- 70: Aufnahmeöffnung
- 72: Gehäuseinnenwand

- I: Sperrposition
- II: Drehposition

## Patentansprüche

1. Übergangsplattform (1) für einen Übergang zwischen zwei beweglich miteinander verbunden Fahrzeugteilen, insbesondere eines Schienenfahrzeugs oder eines Gelenkbusses, mit einer Trittplatte (10) zur Anordnung auf einer jeweiligen Gleitplatte (12,14) der beweglich miteinander verbundenen Fahrzeugteile und mit wenigstens einem unterseitig an der Trittplatte (10) angeordneten Schwenkarm (16) zum Untergreifen der jeweiligen Gleitplatte (12,14), um ein Abheben der Trittplatte (10) von den Gleitplatten (12,14) zu verhindern, wobei der Schwenkarm (16) mittels eines Drehgelenks (18) verschwenkbar an der Trittplatte (10) angeordnet ist,
wobei die Übergangsplattform (1) ein Betätigungsmittel (20) zum Verschwenken des Schwenkarms (16) aufweist, das im Einbauzustand von einer Oberseite (21) der Trittplatte (10) betätigbar ist, **dadurch gekennzeichnet, dass**
das Drehgelenk (18) und das Betätigungsmittel (20) als eine gemeinsame an der Trittplatte (10) angeordnete Baueinheit ausgebildet sind.

2. Übergangsplattform (1) nach Anspruch 1,
**dadurch gekennzeichnet, dass**
das Drehgelenk (18) und das Betätigungsmittel (20) baueinheitlich ausgebildet sind.

3. Übergangsplattform (1) nach einem der vorhergehenden Ansprüche,
**dadurch gekennzeichnet, dass**
das Betätigungsmittel (20) eine Schlüsselkontur (22) zum Aufnehmen eines Steckschlüssels und zum Drehen des Betätigungsmittels (20) um eine Drehachse (24) aufweist.

4. Übergangsplattform (1) nach einem der vorhergehenden Ansprüche,
**dadurch gekennzeichnet, dass**
das Betätigungsmittel (20) einen Bolzen (48) aufweist, der drehbar in einem Gehäuse (26) des Drehgelenks (18) angeordnet ist.

5. Übergangsplattform (1) nach Anspruch 4,
**dadurch gekennzeichnet, dass**
das Gehäuse (26) drehfest in einer Aufnahmeöffnung (70) an der Trittplatte (10) gehalten ist.

6. Übergangsplattform (1) nach Anspruch 4 oder 5,
**dadurch gekennzeichnet, dass**
zwischen dem Gehäuse (26) und dem Betätigungsmittel (20) ein Sicherungsring (28) angeordnet ist, wobei der Sicherungsring (28) eine Innenkontur (30) zum formschlüssigen Eingriff der Schlüsselkontur (22) des Betätigungsmittels (20) aufweist.

7. Übergangsplattform (1) nach Anspruch 6,
**dadurch gekennzeichnet, dass**
der Sicherungsring (28) entlang der Drehachse (24) axial verschiebbar ist und mittels der Federkraft eines Federelementes in Richtung der Oberseite (21) vorgespannt ist.

8. Übergangsplattform (1) nach Anspruch 6 oder 7,
**dadurch gekennzeichnet, dass**
das Gehäuse (26) eine Kulisse (32) aufweist und dass der Sicherungsring (28) einen Vorsprung (34) aufweist, wobei der Vorsprung (34) in der Kulisse (32) des Gehäuses (26) entlang der Drehachse (24) axial verschiebbar ist zwischen
a) einer Sperrposition (I), bei der das Gehäuse (26) und das Betätigungsmittel (20) mittels des Sicherungsrings (28) drehfest gekoppelt sind, und
b) einer Drehposition (II), bei der das Betätigungsmittel (20) frei von der Innenkontur (30) des Sicherungsrings (28) drehbar ist.

9. Übergangsplattform (1) nach einem der Ansprüche 4 bis 8,
**dadurch gekennzeichnet, dass**
der Schwenkarm (16) drehfest an dem Bolzen (48) angeordnet ist.

10. Übergangsplattform (1) nach einem der vorhergehenden Ansprüche,
**dadurch gekennzeichnet, dass**
das Betätigungsmittel (20) eine Markierung (36) zur Anzeige einer Drehstellung des Schwenkarms (16) aufweist.

11. Übergangsplattform (1) nach einem der vorhergehenden Ansprüche,
**dadurch gekennzeichnet, dass**
die Oberseite des Drehgelenkes (18) bündig mit der Oberseite (21) der Trittplatte (10) abschließt.

12. Übergangsplattform (1) nach einem der vorhergehenden Ansprüche,
**dadurch gekennzeichnet, dass**
die Trittplatte (10) einen Pin (38) zum Anordnen in einen Schlitz (40) in wenigstens einer der Gleitplatten (12) aufweist.

13. Übergangsplattform (1) nach einem der vorhergehenden Ansprüche,
**dadurch gekennzeichnet, dass**
der Schwenkarm (16) in seinen Armendbereichen jeweils ein Gleitstück (42) zum Abgleiten an den und/oder zum Andrücken an die jeweiligen Gleitplatten (12,14) aufweist.

14. Übergangsplattform (1) nach einem der vorhergehenden Ansprüche,
**dadurch gekennzeichnet, dass**
dass mindestens zwei Drehgelenke (18) vorgesehen sind, die in Längsrichtung der Trittplatte (10) beabstandet zueinander angeordnet sind.

15. Übergang zur Anordnung zwischen zwei beweglich miteinander verbundenen Fahrzeugteilen mit einer Übergangsplattform (1) gemäß einem der vorhergehenden Ansprüche.

## Claims

1. Gangway platform (1) for a gangway between two movably interconnected vehicle parts, in particular of a rail vehicle or an articulated bus, having a step plate (10) for arrangement on a respective sliding plate (12, 14) of the movably interconnected vehicle parts, and having at least one swivel arm (16), arranged on the underside of the step plate (10), for engaging under the respective slide plate (12, 14) in order to prevent the step plate (10) from lifting off the slide plates (12, 14), the swivel arm (16) being arranged pivotably on the step plate (10) by means of a swivel joint (18),
**wherein**
the gangway platform (1) has an actuating means (20) for swiveling the swivel arm (16), which actuating means (20) can be actuated from an upper side (21) of the step plate (10) in the installed state,
**characterized in that**
the swivel joint (18) and the actuating means (20) are designed as a common structural unit arranged on the step plate (10).

2. Gangway platform (1) according to claim 1,
**characterized in that**
the swivel joint (18) and the actuating means (20) are designed as a structural unit.

3. Gangway platform (1) according to any one of the preceding claims,
**characterized in that**
the actuating means (20) has a key contour (22) for receiving a socket wrench and for rotating the actuating means (20) about a rotational axis (24).

4. Gangway platform (1) according to any one of the preceding claims,
**characterized in that**
the actuating means (20) includes a bolt (48) rotatably arranged in a housing (26) of the swivel joint (18).

5. Gangway platform (1) according to claim 4,
**characterized in that**
the housing (26) is held non-rotatably in a receiving opening (70) on the step plate (10).

6. Gangway platform (1) according to claim 4 or 5,
**characterized in that**
a retaining ring (28) is arranged between the housing (26) and the actuating means (20), the retaining ring (28) having an inner contour (30) for positive engagement of the key contour (22) of the actuating means (20).

7. Gangway platform (1) according to claim 6,
**characterized in that**
the retaining ring (28) is axially displaceable along the rotational axis (24) and is prestressed in the direction of the upper side (21) by means of the spring force of a spring element.

8. Gangway platform (1) according to claim 6 or 7,
**characterized in that**
the housing (26) has a gate (32), and **in that** the retaining ring (28) has a projection (34), the projection (34) being axially displaceable in the gate (32) of the housing (26) along the axis of rotation (24) between
a) a locking position (I), in which the housing (26) and the actuating means (20) are coupled in a rotationally fixed manner by means of the retaining ring (28), and
b) a rotational position (II), in which the actuating means (20) is rotatable free of the inner contour (30) of the retaining ring (28).

9. Gangway platform (1) according to one of the claims 4 to 8,
**characterized in that**
the swivel arm (16) is arranged non-rotatably on the bolt (48).

10. Gangway platform (1) according to any one of the preceding claims,
**characterized in that**
the actuating means (20) has a marking (36) for indicating a rotational position of the swivel arm (16).

11. Gangway platform (1) according to any one of the preceding claims,
**characterized in that**
the upper side of the swivel joint (18) is flush with the upper side (21) of the step plate (10).

12. Gangway platform (1) according to any one of the preceding claims,
**characterized in that**
the step plate (10) has a pin (38) for placement in a slot (40) in at least one of the slide plates (12).

13. Gangway platform (1) according to any one of the preceding claims,
**characterized in that**
the swivel arm (16) has in its arm end regions in each case a sliding piece (42) for sliding against and/or pressing against the respective sliding plates (12, 14).

14. Gangway platform (1) according to any one of the preceding claims,
**characterized in that**
**in that** at least two swivel joints (18) are provided, which are arranged at a distance from one another in the longitudinal direction of the step plate (10).

15. Gangway for being arranged between two movably interconnected vehicle parts with a gangway platform (1) according to any of the preceding claims.

## Revendications

1. Plateforme de transition (1) pour une transition entre deux composants de véhicules reliés entre eux de manière mobile, notamment d'un véhicule sur rails ou d'un bus articulé, avec un marchepied (10) à mettre en place sur une plaque coulissante respective (12,14) des composants de véhicules reliés entre eux de manière mobile et avec au moins un bras pivotant (16) se trouvant sur la face inférieure du marchepied (10) pour saisir par en-dessous la plaque coulissante respective (12,14), afin d'empêcher un soulèvement du marchepied (10) des plaques coulissantes (12,14), le bras pivotant (16) étant monté de manière pivotante sur le marchepied (10) à l'aide d'une articulation pivotante (18),
la plateforme de transition (1) présentant un dispositif d'actionnement (20) pour faire pivoter le bras pivotant (16), lequel, à l'état monté, peut être actionné depuis une face supérieure (21) du marchepied (10),
**caractérisée par le fait que**
l'articulation pivotante (18) et le dispositif d'actionnement (20) représentent conjointement une unité montée sur le marchepied (10).

2. Plateforme de transition (1) selon la revendication 1,
**caractérisée par le fait que**
l'articulation pivotante (18) et le dispositif d'actionnement (20) constituent une unité constructive.

3. Plateforme de transition (1) selon l'une des revendications précédentes,
**caractérisée par le fait que**
le dispositif d'actionnement (20) possède un contour de clé (22) pour recevoir une clé enfichable et pour tourner le dispositif d'actionnement (20) autour d'un axe pivotant (24).

4. Plateforme de transition (1) selon l'une des revendications précédentes,
**caractérisée par le fait que**
le dispositif d'actionnement (20) possède un boulon (48) monté de manière rotative dans un logement (26) de l'articulation pivotante (18).

5. Plateforme de transition (1) selon la revendication 4,
**caractérisée par le fait que**
le logement (26) est maintenu de manière fixe en rotation dans une ouverture de logement (70) sur le marchepied (10).

6. Plateforme de transition (1) selon la revendication 4 ou 5,
**caractérisée par le fait que**
entre le logement (26) et le dispositif d'actionnement (20), une bague de sûreté (28) est montée, cette bague de sûreté (28) présentant un contour intérieur (30) pour l'engagement par complémentarité de forme du contour de clé (22) du dispositif d'actionnement (20).

7. Plateforme de transition (1) selon la revendication 6,
**caractérisée par le fait que**
la bague de sûreté (28) peut être repoussée axialement le long de l'axe rotatif (24) et précontrainte en direction de la face supérieure (21) à l'aide de la force ressort d'un élément à ressort.

8. Plateforme de transition (1) selon la revendication 6 ou 7,
**caractérisée par le fait que**
le logement (26) possède une coulisse (32) et que la bague de sûreté (28) présente une saillie (34), la saillie (34) pouvant être repoussée axialement dans la coulisse (32) du logement (26) le long de l'axe rotatif (24) entre
a) une position de blocage (I) dans laquelle le logement (26) et le dispositif d'actionnement (20) sont couplés de manière fixe en rotation à l'aide de la bague de sûreté (28) et
b) une position de blocage (II) dans laquelle le dispositif d'actionnement (20) peut tourner librement par rapport au contour intérieur (30) de la bague de sûreté (28).

9. Plateforme de transition (1) selon une des revendications 4 à 8,
**caractérisée par le fait que**
le bras pivotant (16) est installé de manière fixe en rotation sur le boulon (48).

10. Plateforme de transition (1) selon l'une des revendications précédentes,
**caractérisée par le fait que**
le dispositif d'actionnement (20) possède un marquage (36) pour l'affichage d'une position rotative du bras pivotant (16).

11. Plateforme de transition (1) selon l'une des revendications précédentes,
**caractérisée par le fait que**
la face supérieure de l'articulation pivotante (18) affleure avec la face supérieure (21) du marchepied (10).

12. Plateforme de transition (1) selon l'une des revendications précédentes,
**caractérisée par le fait que**
le marchepied (10) présente une broche (38) destinée à être mise en place dans une fente (40) dans au moins une des plaques coulissantes (12).

13. Plateforme de transition (1) selon l'une des revendications précédentes,
**caractérisée par le fait que**
le bras pivotant (16) présente, dans ses zones d'extrémité de bras respectivement une pièce de glissement (42) pour glisser sur la plaque de glissement respective (12, 14) et/ou pour la presser contre celle-ci.

14. Plateforme de transition (1) selon l'une des revendications précédentes,
**caractérisée par le fait que**
au moins deux articulations pivotantes (18) sont prévues, lesquelles sont disposées à distance l'une de l'autre dans le sens longitudinal du marchepied (10).

15. Transition à disposer entre deux composants de véhicules reliés entre eux de manière mobile avec une plateforme de transition (1) selon l'une des revendications précédentes.
